# EUROPÄISCHE PATENTANMELDUNG

(11) **EP 1 745 699 A1**
(43) Veröffentlichungstag der Anmeldung: **24.01.2007**
(21) Anmeldenummer: 06012361.9
(22) Anmeldetag: 16.06.2006
(51) Int. Cl.: A22B 5/00, B26B 9/00, G06F 17/00

(54) **Messer und Messerregistriersystem**

(30) Priorität: 21.07.2005 DE 202005011454 U
(71) Anmelder: Friedr. Dick GmbH & Co.KG, 73779 Deizisau (DE)
(72) Erfinder: Leuze, Wilhelm, 73730 Esslingen (DE); Löhnert, Horst, 73760 Ostfildern (DE)
(74) Vertreter: Kohler Schmid Möbus

(57) **Zusammenfassung**

Vorgeschlagen wird ein Messer mit einem Handgriff und einer Klinge, bevorzugt ein Ausbeinmesser oder ein Zerlegemesser, wobei in die Oberfläche der Klinge eine Codierung mechanisch eingearbeitet ist. Derartige Messer eignen sich zum Einsatz z.B. in der lebensmittelverarbeitenden Industrie, speziell in der Fleisch verarbeitenden Industrie, z.B. in Schlachtereien und Zerlegebetrieben, z.B. um Fleisch von Tieren von Knochen zu trennen aber auch zur Verwendung in Gemüse verarbeitenden Betrieben.

## Beschreibung

Die Erfindung betrifft ein Messer mit einem Handgriff und einer Klinge, insbesondere ein Ausbeinmesser. Derartige Messer werden z.B. in der Lebensmittel verarbeitenden Industrie, speziell in Schlachtereien oder Zerlegebetrieben eingesetzt, z.B. um Fleisch von Tieren von Knochen zu trennen.

In Lebensmittel verarbeitenden Betrieben, insbesondere in Großschlachtereien oder Zerlegebetrieben, müssen die Messer in regelmäßigen Abständen geschliffen und gereinigt werden. Beim Schleifen der Messer ist es schwierig, das nachgeschliffene Messer dem Verwender des Messers (Messerbesitzer) wieder zuzuordnen. Ferner muss sichergestellt werden, dass alle Messer regelmäßig gereinigt werden. Da die Messerbesitzer üblicherweise ihr spezielles Messer bevorzugt behalten wollen, ergeben sich häufig Unregelmäßigkeiten hinsichtlich des Schleif- und/oder Reinigungszyklus der Messer.
Ist ein Messer verloren gegangen, so muss dieses unbedingt wieder aufgefunden werden. Das Messer könnte z.B. in einer Charge zur Weiterverarbeitung, z.B. in einem Container bereitgehaltenen Fleisches, verloren gegangen sein. Daraus würde sich, neben der Verletzungsgefahr für an der weiteren Verarbeitung beteiligte Personen, ein erhebliches Risiko hinsichtlich der Beschädigung von Verarbeitungsmaschinen ergeben. Das Messer könnte im schlimmsten Fall auch ganz oder evtl. von Mahlwerken zerkleinert in der Verarbeitungskette und im Endprodukt verbleiben. Dies würde zu großen Schadensersatzrisiken führen.

Nachteilig bei den bekannten Messern ist es, dass diese nicht zuverlässig individuell gekennzeichnet sind. Eine Buchführung über den momentanen Verbleib der Messer, z.B. in Schlachtereien oder Zerlegebetrieben, ist daher nur schwer möglich. Der Verlust eines Messers kann daher oft nur mit zeitlich großer Verzögerung festgestellt werden. Dies kann zu erheblichen Risiken führen.

Der Erfindung liegt die Aufgabe zugrunde, ein Messer und ein Messerregistriersystem bereitzustellen, welche die Nachteile des Standes der Technik vermeiden und insbesondere eine zuverlässige Handhabung des Messers in Grossbetrieben gewährleisten.

Diese Aufgabe wird durch das Messer und das Messerregistriersystem der unabhängigen Ansprüche gelöst. Die abhängigen Ansprüche stellen bevorzugte Ausführungsformen der Erfindung dar.

Bei dem erfindungsgemäßen Messer mit einem Handgriff und einer Klinge handelt es sich bevorzugt um ein Ausbeinmesser oder ein Zerlegemesser um Fleisch von Knochen zu lösen. Erfindungsgemäß ist in die Oberfläche der Klinge eine Codierung mechanisch eingearbeitet.
Die mechanische Einarbeitung hat, z.B. gegenüber einer mittels eines Lasers eingebrachten oder einer aufgedruckten Kennzeichnung, den Vorteil, dass sie dauerhafter und korrosionsbeständiger ist, da eine derart eingearbeitete Codierung tiefer in das Material der Messerklinge hineingeht.

Bevorzugt ist die Codierung eingenadelt und/oder eingehämmert. Durch Hämmern oder Nadeln wird eine einfache und sehr dauerhafte mechanische Codierung möglich. Beim Nadeln wird in einer Matrix die flächige Form der Codierung mittels Nadeln eingearbeitet. Dabei wird an den Positionen der Matrix, die Teil der Form sind, mittels einer Nadel eine Vertiefung in die Oberfläche der Klinge eingedrückt. Auf diese Weise ist es möglich, Codierungen beliebiger Form, gemäß einem Nadeldrucker, einzuarbeiten. Die Codierung ist also vorteilhaft als Datamatrix-Code ausgeführt. Bei einem derartiger Datamatrix-Code besteht die Codierung aus einer Matrix von z.B. zwölf mal zwölf Positionen, die um die Form der Codierung zu bestimmen, entweder z.B. mittels einer Nadel als Vertiefung in die Oberfläche eingebracht werden oder als unveränderte Oberfläche verbleiben. Die Form der Codierung ist bevorzugt quadratisch und hat z.B. eine Kantenlänge von drei Millimetern. Die Form zu einer Codierung kann so ausgestaltet sein, dass auch bei Fehlern der Form die Codierung noch eindeutig zuordnungsfähig ist. Z.B. können zur eigentlichen Codierung nur zehn mal zehn Module der Positionen notwendig sein. Dadurch ist die Codierung noch eindeutig lesbar, wenn ca. 30% des Codes d.h. der Positionen z.B. durch Korrosion, oder durch teilweises Abschleifen beim Nachschleifen des Messers, fehlen.

Vorteilhaft ist zusätzlich eine Buchstaben- und/oder Zahlenfolge eingearbeitet. Die Codierung kann dabei in einem Messerregistriersystem dieser Buchstaben und/oder Zahlenfolge zugeordnet sein. Dadurch ist es möglich, die Codierung, auch ohne den Datamatrix-Code zu entziffern, direkt als Text zu lesen. Es kann z.B. ein Text aus zwei Buchstaben, gefolgt von einer dreistelligen Nummer, verwendet werden. Dies ergibt die Möglichkeit der eindeutigen fortlaufenden Kennzeichnung von 676 000 Messern. Der Text auf der Klinge ist dabei jederzeit erweiterbar. Zusätzlich kann eine Artikelnummer, also der Typ des Messers, eingearbeitet sein.

Wenn die Codierung in einem handgriffnahen Bereich der Oberfläche der Klinge am Rücken der Klinge angeordnet ist, wird die Codierung beim Nachschleifen des Messers nicht beschädigt.

Ein erfindungsgemäßes Messerregistriersystem weist mindestens ein erfindungsgemäßes Messer und ein Codierungslesegerät, eingerichtet, die Codierung der Messer zu lesen, auf. Weiter ist ein Computersystem vorhanden, mit einer Datenbank, in der den Codierungen Informationen zugeordnet sind, und Anzeigemitteln zur Anzeige von aus der Datenbank gewonnenen Informationen.
Die Codierung der Messer wird mittels des Lesegeräts eingelesen und es wird das Messer, bzw. dessen Codierung, in der Datenbank angelegt, d.h. registriert. Dadurch wird eine einfache Verwaltung der eindeutig gekennzeichneten Messer möglich. Die Software zur Handhabung der Datenbank kann in üblicher Weise individuell auf die Bedürfnisse beim jeweiligen Einsatzort der Messer angepasst werden. Hauptziel der Registrierung ist die Rückverfolgbarkeit des Einsatzes der Messer.

Das Codierungslesegerät umfasst bevorzugt ein Kamerasystem, eingerichtet, insbesondere genadelte oder gehämmerte Datamatrix-Codes zu lesen. Mittels eines Kamerasystems ist es möglich, die Codierung berührungsfrei auch auf polierten, reflektierenden Oberflächen, wie einer Messerklinge, zu erkennen und einzulesen. Dabei kann eine Positionierhilfe, die einen Laserstrahl aufweist, vorteilhaft im Codierungslesegerät vorhanden sein. Der Anschluss des Lesegeräts an das Computersystem kann bevorzugt über bekannte drahtlose Schnittstellen erfolgen, z.B. nach dem Typ Firewire IEEE 1394. Zur Handhabung des Codierungslesegerätes ist eine Lesedistanz von ca. 10 bis 80 Millimeter, bei einem Neigungswinkel von 45 Grad günstig.

Besonders bevorzugt umfassen die Informationen in der Datenbank die Benutzer und/oder die Benutzungsorte und/oder Benutzungszeiten der jeweiligen Messer. Dadurch wird als ein Hauptziel der Registrierung die Rückverfolgbarkeit des Einsatzes der Messer erreicht.

Das erfindungsgemäße Messerregistriersystem kann beliebige Daten als Informationen in der Datenbank abspeichern. Bevorzugt kann z.B. gespeichert werden:
- die jeweiligen Benutzer des Messers;
- Benutzungszeiten des Messers;
- Ort der Benutzung des Messers;
- Zeiten zur Wartung des Messers, z.B. Schleifdatum;
- Produktionsdaten, z.B. der Abnehmer des Produkts, bei dessen Herstellung das Messer verwendet wurde;
- der Typ des Messers und bestimmte Eigenschaften des Typs.

Die Messer können in einer automatisierten Messerausgabestelle verwahrt werden. Über die Ausgabe eines jeden Messers an einen Angestellten und die Rückgabe des Messers kann automatisch Buch geführt werden. Weiter kann das Computersystem zuverlässig erkennen, ob ein erfindungsgemäßes Messer verloren gegangen ist. Dies kann z.B. festgestellt werden, wenn ein entsprechendes Messer, bzw. dessen gespeicherte Daten, nach einem Messerverwendungsplan nicht rechtzeitig an einer Rückgabestelle zu dessen Registrierung eingelesen werden. Über einen Mitarbeiterstammdatensatz, der in der Datenbank angelegt werden kann und die möglichen Benutzer der Messer namentlich enthält, können die Messer jeweils einer Person zugeordnet werden. D.h. an einer Messerausgabe kann durch Einlesen der Codierung des Messers mittels des Codierungslesegeräts registriert werden, welches Messer wem ausgegeben wurde. Mit Hilfe der Software der Datenbank lässt sich schnell ermitteln, welche Messer an wen ausgegeben wurden und/oder welche Messer beim Schleifen oder bei der Reinigung sind. Insbesondere kann ermittelt werden, welche Messer zurückgegeben wurden, d.h. z.B. am Ende einer Schicht in einem Fleisch verarbeitenden Betrieb bei einer Messerausgabe wieder zurückgegeben wurden. Dadurch kann sofort erkannt werden ob ein Messer im zerlegten Fleisch verschwunden ist, so dass rasch eingegriffen werden kann bevor größere Schäden entstehen.
Über eine Statistik kann ermittelt werden, wie oft die einzelnen Messer nachgeschliffen wurden oder wer wann welche Messer verwendet hat.
In einem bevorzugten Ausführungsbeispiel des erfindungsgemäßen Messerregistriersystems werden, insbesondere Informationen in der Datenbank gespeichert, die folgende Merkmale einer Messerverwaltung ermöglichen:
- Rückverfolgung der Benutzung des Messers
- Verwaltung der Messer und der Personen, z.B. einer Benutzergruppe und/oder eines Subunternehmers, die die Messer benutzen
- Aus- und Rückgabe der Messer
- Übersicht, welche Messer ausgegeben wurden
- Kontrolle, ob alle Messer zurückgegeben wurden
- Schleif-Verwaltung
- Reinigungsverwaltung
- Schichtverwaltung
- Übersicht, wo sich welches Messer befindet
- Statistische Auswertung der erfassten Daten

Vorgeschlagen wird ein Messer mit einem Handgriff und einer Klinge, bevorzugt ein Ausbeinmesser oder ein Zerlegemesser, wobei in die Oberfläche der Klinge eine Codierung mechanisch eingearbeitet ist. Derartige Messer eignen sich zum Einsatz z.B. in der lebensmittelverarbeitenden Industrie, speziell in der Fleisch verarbeitenden Industrie, z.B. in Schlachtereien und Zerlegebetrieben, z.B. um Fleisch von Tieren von Knochen zu trennen, aber auch zur Verwendung in Gemüse verarbeitenden Betrieben.

Die Erfindung beschränkt sich nicht auf die vorstehend angegebenen Ausführungsbeispiele. Vielmehr ist eine Anzahl von Varianten denkbar, welche auch bei grundsätzlich anders gearteter Ausführung von den Merkmalen der Erfindung Gebrauch machen.

## Patentansprüche

1. Messer mit einem Handgriff und einer Klinge, bevorzugt Ausbeinmesser,
**dadurch gekennzeichnet, dass**
in die Oberfläche der Klinge eine Codierung mechanisch eingearbeitet ist.

2. Messer nach Anspruch 1,
**dadurch gekennzeichnet, dass**
die Codierung eingenadelt und/oder eingehämmert ist.

3. Messer nach mindestens einem der Ansprüche 1 bis 2,
**dadurch gekennzeichnet, dass**
die Codierung als Datamatrix-Code ausgeführt ist.

4. Messer nach Anspruch 3,
**dadurch gekennzeichnet, dass**
zusätzlich eine Buchstaben- und/oder Zahlenfolge eingearbeitet ist.

5. Messer nach mindestens einem der Ansprüche 1 bis 4,
**dadurch gekennzeichnet, dass**
die Codierung in einem handgriffnahen Bereich der Oberfläche der Klinge am Rücken der Klinge angeordnet ist.

6. Messerregistriersystem, mit mindestens einem Messer nach mindestens einem der Ansprüche 1 bis 5 und einem Codierungslesegerät, eingerichtet, die Codierung der Messer zu lesen und einem Computersystem mit einer Datenbank, in der den Codierungen Informationen zugeordnet sind, und Anzeigemitteln zur Anzeige von aus der Datenbank gewonnenen Informationen.

7. Messerregistriersystem nach Anspruch 6,
**dadurch gekennzeichnet, dass**
das Codierungslesegerät ein Kamerasystem umfasst, eingerichtet Datamatrix-Codes zu lesen.

8. Messerregistriersystem nach mindestens einem der Ansprüche 6 bis 7,
**dadurch gekennzeichnet, dass**
die Informationen in der Datenbank die Benutzer und/oder die Benutzungsorte und/oder Benutzungszeiten der jeweiligen Messer umfassen.
